Europäisches Patentamt

(19) **European Patent Office**

Office européen des brevets

(11) Publication number: **0 129 740**
**B1**

(12) **EUROPEAN PATENT SPECIFICATION**

(45) Date of publication of patent specification: **23.09.87**

(51) Int. Cl.⁴: **A 01 G 31/02**

(21) Application number: **84106254.0**

(22) Date of filing: **01.06.84**

(54) **Supporting substrate for hydroponics and aeroponics, and method for the manufacture thereof.**

(30) Priority: **09.06.83 IT 1811583**

(43) Date of publication of application:
**02.01.85 Bulletin 85/01**

(45) Publication of the grant of the patent:
**23.09.87 Bulletin 87/39**

(84) Designated Contracting States:
**AT BE CH DE FR GB LI NL SE**

(56) References cited:
**CH-A- 409 507**
**GB-A-1 320 940**
**US-E- 25 438**

(73) Proprietor: **Toffoli, Costantino**
**Strada Quistello 4**
**I-37060 Mozzecane (Verona) (IT)**

(72) Inventor: **Toffoli, Costantino**
**Strada Quistello 4**
**I-37060 Mozzecane (Verona) (IT)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

The invention relates to a supporting substrate for hydroponics and aeroponics according to the preamble of claim 1, as well as to a method of manufacturing said supporting substrate.

It is a known fact that so-called hydroponic and aeroponic cultures have gained widespread acceptance, said cultures being grown rather than in conventional soil, in an artificial medium, thanks to the advantageous conditions that they can afford from several standpoints, such as a high crop yield, early riping, removal of many cultivating procedures, etc. One of the more commonly applied forms of hydro- and aeroponic cultures provides for a solid substrate accommodated in a specially arranged container wherethrough a nutritional solution is circulated which can nourish the roots of the plants grown in said substrate.

Basic requirements for a good unitary substrate are first of all a high porosity, meaning the presence through its mass of interstices for receiving the plant roots and allowing the nutritional solution therethrough, and good compactness to provide support for the plants; other important features are the ability to not interact with the nutritional solution, thereby the substrate should be chemically inert, and have a high insulating power to limit thermal unbalance.

Materials more commonly used nowadays to form unitary substrates are known to be such natural occurring materials as sand, gravel, pumice, or artificial materials as Vermiculite or Perlite, and all these materials have the dual disadvantage of being expensive and of not exhibiting all of the features listed above to an optimum degree.

A highly economical material onto which the attention of the skilled ones has focused, in consideration of its having the two last-mentioned features developed to the highest degree, it being chemically inert and having high insulating properties, is expanded polystrene, which has never been adopted alone, however, because the forms of aggregation of the tiny balls comprising it which have been taken into consideration heretofore, that is completely loose balls and balls which are welded to one another in a compact form without interstices, are such as to completely lack one of the two first-mentioned essential features for the substrate, namely compactness in the instance of loose balls, and porosity in the instance of welded balls without interstices.

An example of the use of expanded polystyrene mixed with other materials is reported in CH—A—409 507 disclosing a substrate according to the preamble of claim 1. Another known substrate is furthermore disclosed in GB—A—1 320 940.

It is an object of this invention to provide a supporting substrate for hydroponics and aeroponics, wherein expanded polystyrene is used to provide a unitary core.

Another object of the invention is to provide a supporting substrate, wherein the container for the unitary core can take highly simplified and inexpensive forms.

A further object of this invention is to provide a method of manufacturing the supporting substrate, which can be implemented in a rapid and economical fashion.

These objects are achieved by a supporting substrate for hydroponics and aeroponics according to the invention, as defined in the claim 1.

A method of manufacturing an embodiment of the supporting substrate of this invention is reported in claim 12.

The features and advantages of the invention will be clearly understood from the following description of some preferred, but not exclusive, embodiments of the invention, with reference to the accompanying illustrative but not limitative drawings, where:

Figure 1 shows a section of this supporting substrate, according to a first embodiment thereof;

Figure 2 is a cross-sectional view of a supporting substrate similar to that shown in Figure 1 but slightly modified with respect thereto;

Figure 3 shows a modified embodiment of this supporting substrate;

Figure 4 shows the top portion of the supporting substrate, as slightly modified with respect to the embodiment shown in Figure 3; and

Figure 5 shows a further embodiment of the supporting substrate.

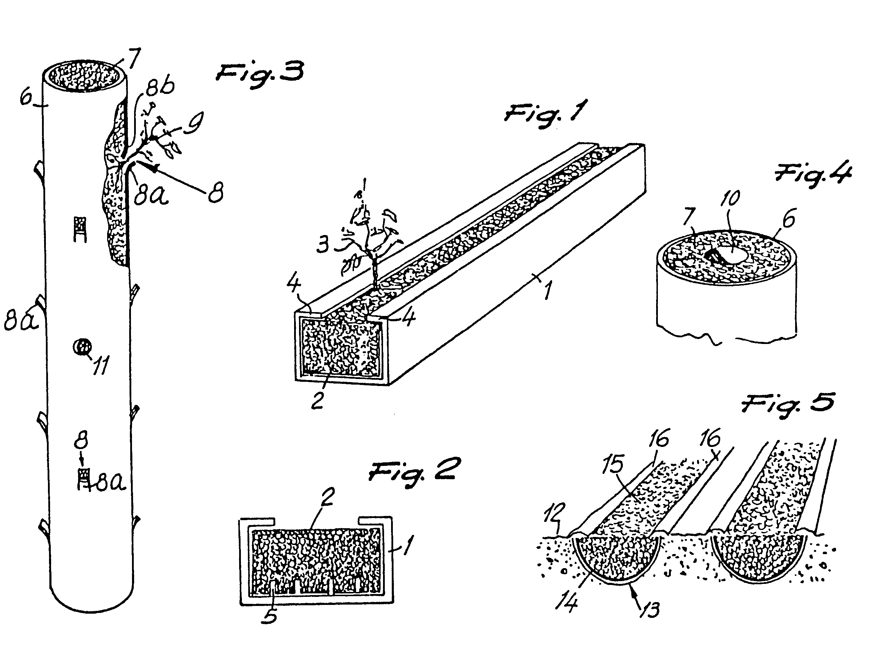

With reference to Figure 1, the numeral 1 designates a channel, e.g. formed from sheet metal, which functions as a container for the unitary core comprising expanded polystyrene in the form of a parallelepipedon 2, inserted through the channel in any desired manner and being sintered by conventional methods to a high void volume, i.e. with significant interspaces between welded polystyrene balls; by way of example, we will mention values in the 20% to 25% range as being suitable to provide said void volume. Culture plants 3 are planted in an extremely rapid fashion by merely removing a few polystyrene balls from the sintered body to form a small recess where the plant stem can take an upright stance and be held in that position by the adequate compactness of the surrounding mass, and in time, the roots will gradually make their way through the interstices between balls which are swept by the nutritional solution fed into the channel in a conventional way, such as by percolation from the top or by subirrigation, and recovered also in a conventional way.

The serrations 4 have the function of retaining the unitary core 2 in position against the upwardly directed buoyant force applied by the nutritional solution.

The sintered expanded polystyrene parallelepipedon 2 may include longitudinal cuts 5, as shown in Figure 2.

Figure 3 illustrates a modified form of the supporting substrate which comprises a plastic tube 6 containing the solid core 7 formed by the sintered expanded polystyrene balls, and having in its lateral surface holes 8 adapted to allow the stems of the culture plants 9 to extend outwards, whose roots will extend, as discussed hereinabove, through the interstices between polystyrene balls to contact the nutritional solution being fed in a conventional manner.

In order to direct the plant stems upwards, it is advantageously contemplated that the holes 8 be provided with a projecting lower lip 8a and recessed upper lip 8b, which may be readily formed by taking to the surface and then introducing a hot point.

Of course, the tube 6 may be provided for a horizontal lay, and in that instance the holes in its lateral surface will have an even contour, and in the body of the sintered expanded polystyrene 7 a longitudinal middle cutout 10 may be provided, as shown in Figure 4, or alternatively, a plurality of such cutouts, also longitudinally and arranged as desired.

A method which can lead to the manufacture of the supporting substrate shown in Figures 3 and 4 in a most rapid manner may be implemented in accordance with the teachings of published Italian Patent Application No. 84931-A/79: this method comprises a first step wherein a tube such as 6 is filled with loose balls of expanded polystyrene, with the optional presence of a plug to form cutouts such as 10, a second step of sintering said balls by inserting through holes such as 11 at least one probe adapted to convey steam to the tube interior which during this step acts, accordingly, as a mould, and a third step of forming holes such as 8 in the lateral surface.

Shown in Figure 5 is a further embodiment of the supporting substrate particularly suitable for use with unproductive soils lacking irrigation water: indicated at 12 therein is the soil wherein furrows 13 are formed which are then covered with a sheet 14 of a waterproof material, e.g. polyethylene, on which the unitary core is laid which comprises the expanded polystyrene 15 and then secured therein by means of the soil edges 16.

It should be noted that in this embodiment, wherein it is the soil which provides a container for the unitary core, great savings are achieved in installation through the elimination of any supporting substrates which differently constructed containers require one way or the other.

It may be appreciated from the foregoing description that the container for the unitary core may take any of several forms; in addition to the ones illustrated, we will mention an embodiment comprising a sheet of a waterproof material, such as aluminium, adapted to be placed, either rigid with or just laid on, around the periphery of the body forming the solid core, which may be optionally bordered with a mere coat of a waterproofing paint, the whole being then intended to rest on any structure or just over the ground.

The invention just described is susceptible to many modifications and changes within the scope of the claims; further, all of the details may be replaced with other, technically equivalent, elements.

## Claims

1. A supporting substrate for hydroponics and aeroponics, comprising a unitary core (2, 7, 15) accommodated in a container (1, 6, 14) adapted to convey a nutritional solution therethrough, characterized in that said unitary core (2, 7, 15) consists essentially of sintered expanded polystyrene having a high void volume.

2. A substrate according to claim 1, characterized in that said void volume is comprised in the range 20% to 25%.

3. A substrate according to Claim 1 or 2, characterized in that the unitary core container comprises a channel (1) having a substantially rectangular cross-section open along the top face, adapted to contain the unitary core (2) in parallelepipedal form, and provided with substantially horizontal serrations (4) extending from the top end of the vertical side faces so as to resist the upwardly directed buoyant force exerted on the unitary core (2) by the nutritional solution.

4. A substrate according to one or more of the preceding claims, characterized in that the unitary core in parallelepipedal form has at least one longitudinal cutout (5) formed at the face adjoining the bottom of the channel.

5. A substrate according to Claims 1 and 2, characterized in that the unitary core container comprises a plastics tube (6) provided with holes (8) in the lateral surface thereof for allowing the culture plant stems (9) to grow out.

6. A substrate according to Claims 1 and 5, characterised in that the holes (8) in the lateral surface of the tube (6) intended to extend with its axis vertical have a projecting lip (8a) in the lower portion and recessed one (8b) in the upper portion, so as to direct the plant stems (9) upwards.

7. A substrate according to one or more of the preceding claims, characterized in that the unitary core (7) contained in the tube (6) has at least one longitudinal cutout (10).

8. A substrate according to one or more of the preceding claims, characterized in that the unitary core (7) contained in the tube (6) has a longitudinal cutout (10) at the middle thereof.

9. A substrate according to one or more of the preceding claims, characterized in that the container (14) for the unitary core (15) comprises a furrow (13) formed in the ground soil (12) and covered with a sheet (14) of a waterproof material, the body of the unitary core (15) being secured therein with the aid of longitudinal soil edges (16).

10. A substrate according to one or more of the preceding claims, characterized in that the container (14) for the unitary core comprises a sheet of a waterproof material associated at least in part with the periphery of the body forming said core, laid either on a structure or directly over the ground.

11. A substrate according to one or more of the preceding claims, characterized in that the container for the unitary core comprises a layer of a waterproofing paint applied at least in part over the periphery of the body forming said core, intended for resting on a structure or directly on the ground.

12. A method of manufacturing the supporting substrate according to Claims 5 to 8 characterised in that it comprises a first step of filling a tube (6) with loose balls of expanded polystyrene, a second step of sintering the balls by inserting at least one probe adapted to convey steam into the tube interior which during this step functions as a mould, and a third step of perforation of the lateral surface of the tube.

**Patentansprüche**

1. Tragsubstrat für hydropone und aeropone Kulturen, bestehend aus einem Einheitskern (2, 7, 15), der in einem Behälter (1, 6, 14) untergebracht und befähigt ist, eine Nährlösung durch diesen zu trasportiern, dadurch gekennzeichnet, daß der Einheitskern (2, 7, 15) im wesentlichen aus gesintertem Schaumpolystyrol mit einem hohen Porenvolumen besteht.

2. Substrat nach Anspruch 1, dadurch gekennzeichnet, daß das Porenvolumen in einem Bereich von 20 bis 25% liegt.

3. Substrat nach Anspruch 1 oder 2, dadurch gekennzeichnet, daß der Einheitskernbehälter aus einer Rinne (1) besteht, die einen im wesentlichen rechteckigen, längs der Oberseite offenen Querschnitt zur Aufnahme des Einheitskern's (2) von parallelpipedischer Form besitzt und mit im wesentlichen horizontalen Rippen (4) versehen ist, die sich vom oberen Ende der vertikalen Seitenflächen aus erstrecken, um der nach oben gerichteten, auf den Einheitskern (2) durch die Nährlösung ausgeübten Auftriebskraft entgegenzuwirken.

4. Substrat nach einem oder mehreren der vorhergehenden Ansprüche, dadurch gekennzeichnet, daß der Einheitskern von parallelepipedischer Form wenigstens einen Längsausschnitt (5) besitzt, der an der am Boden der Rinne angrenzenden Fläche ausgebildet ist.

5. Substrat nach den Ansprüchen 1 und 2, dadurch gekennzeichnet, daß der Einheitskernbehälter aus einem Kunststoffrohr (6) besteht, das mit Löchern (8) in seiner Seitenfläche versehen ist, damit die Pflanzenstiele (9) auswachsen können.

6. Substrat nach den Ansprüchen 1 und 5, dadurch gekennzeichnet, daß die Löcher (8) in der Seitenfläche des Rohres (6), das mit vertikal verlaufender Achse angeordnet werden soll, eine wegstehende Lippe (8a) im unteren Teil und eine zurückspringende Lippe (8b) im oberen Teil aufweist, um die Pflanzenstiele (9) nach oben zu leiten.

7. Substrat nach einem oder mehreren der vorhergehenden Ansprüche, dadurch gekennzeichnet, daß der im Rohr (6) enthaltene Einheitskern (7) wenigstens einen Längsausschnitt (10) aufweist.

8. Substrat nach einem oder mehreren der vorhergehenden Ansprüche, dadurch gekennzeichnet, daß der im Rohr (6) enthaltene Einheitskern (7) einen Längsausschnitt (10) in seiner Mitte aufweist.

9. Substrat nach einem oder mehreren der vorhergehenden Ansprüche, dadurch gekennzeichnet daß der Behälter (14) für den Einheitskern (15) aus einem im Boden (12) ausgebildeten und mit einer Folie (14) aus wasserundurchlässigem Material abgedeckten Furche (13) besteht, wobei der Körper des Einheitskernes (15) darinnen mit Holfe von Bodellängsrändern (16) festgehalten wird.

10. Substrat nach einem oder mehreren der vorhergehenden Ansprüche, dadurch gekennzeichnet, daß der Behälter (14) für den Einheitskern aus einer wenigstens teilweise dem Rand des den Kern bildenden Körpers zugeordneten, auf einem Gestell oder unmittelbar auf dem Boden abgelegten Folie aus wasserundurchlässigem Material besteht.

11. Substrat nach einem oder mehreren der vorhergehenden Ansprüche, dadurch gekennzeichnet, daß der Behälter für den Einheitskern aus einer Schicht aus einem wasserundurchlässigen Anstrich besteht, der wenigstens teilweise auf den Umfang des den Kern bildenden Einheitskörpers, der auf einem Gestell oder direkt auf dem Boden abgelegt werden soll, aufgetragen ist.

12. Verfahren zur Herstellung des Tragsubstrats nach den Ansprüchen 5 bis 8, dadurch gekennzeichnet, daß es eine erste Stufe, in welcher ein Rohr (6) mit losen Kugeln aus geschäumtem Polystyrol gefüllt wird, eine zweite Stufe, in welcher die Kugeln durch Einführen wenigstens einer Sonde gesintert werden, die zur Führung von Wasserdampf in das Innere des während dieser Stufe als Form fungierenden Rohres befähigt ist, und einen dritte Stufe, in welcher die Seitenfläche des Rohres perforiert wird, umfaßt.

**Revendications**

1. Substrat de support pour les cultures hydroponiques et aéroponiques comprenant un noyau unitaire (2, 7, 15) disposé dans un récipient (1, 6, 14) aménagé pour y faire passer une solution nutritive, caractérisé en ce que ledit noyau unitaire (2, 7, 15) consiste essentiellement en polystyrène expansé fritté ayant un grand volume de vide.

2. Substrat suivant la revendication 1 caractérisé en ce que ledit volume de vide est compris dans l'intervalle de 20% à 25%.

3. Substrat suivant l'une des revendications 1 ou 2 caractérisé en ce que le récipient du noyau unitaire comprend un canal (1) ayant une section transversale substantiellement rectangulaire, ouvert le long de la face supérieure, adapté pour pouvoir contenir le noyau unitaire (2), qui a la forme d'un parallélipipède, et muni de rebords intérieurs (4) substantiellement horizontaux qui partent de l'extrémité supérieure des faces latérales verticales de manière à résister à la force de poussée dirigée vers le haut exercée sur le noyau unitaire (2) pour la solution nitritive.

4. Substrat suivant une ou plusieurs des revendications précédentes caractérisé en ce que le noyau unitaire en forme de parallélipipède comporte au moins une entaille longitudinale (5) pratiquée sur la face adjacente au fond du canal.

5. Substrat suivant les revendications 1 ou 2 caractérisé en ce que le récipient du noyau unitaire comprend un tube en plastique (6) pourvu d'orifices (8) sur sa face latérale afin de permettre la croissance vers l'extérieur des tiges des plantes de culture (a).

6. Substrat suivant les revendications 1 à 5 caractérisé en ce que les orifices (8) prévus sur la face latérale du tube (6), destiné à être disposé en ayant son axe vertical, présentent une lèvre en saillie (8a) dans leur partie inférieure et une lèvre rabattue (8b) dans leur partie supérieur afin d'orienter les tiges des plantes (9) vers le haut.

7. Substrat suivant une ou plusieurs des revendications précédentes caractérisé en ce que le noyau unitaire (70 contenu dans le tube (6) comporte au moins une cavité (10) longitudinale.

8. Substrat suivant une ou plusieurs des revendications précédentes caractérisé en ce que le noyau unitaire (7) contenu dans le tube (6) comporte une cavité (10) longitudinale en son milieu.

9. Substrat suivant une ou plusieurs des revendications précédentes caractérisé en ce que le récipient (14) du noyau unitaire (15) comprend un sillon (13) creusé dans le terrain (12) et recouvert d'une feuille (14) d'un matériau imperméable, le corps du noyau unitaire (15) y étant maintenu à l'aide de bordures longitudinales (16) reposant sur le sol.

10. Substrat suivant une ou plusieurs des revendications précédentes caractérisé en ce que le récipient (14) du noyau unitaire comprend une feuille de matière imperméable associée au moins en partie avec la périphérie du corps formant ledit noyau, lequel est déposé sur une structure ou directement sur le sol.

11. Substrat suivant une ou plusieurs des revendications précédentes caractérisé en ce que le récipient du noyau unitaire comporte une couche de peinture imperméabilisante appliquée au moins en partie sur la périphérie du corps formant ledit noyau, lequel est destiné à être déposé sur une structure ou directement sur le sol.

12. Procédé de fabrication du substrat de support suivant les revendications 5 à 8 caractérisé en ce qu'il comprend une première étape dans laquelle on remplit un tube (6) de billes détachées de polystyrène expansé, une deuxième étape consacrée au frittage des billes par introduction d'au moins une sonde pour amener de la vapeur d'eau à l'intérieur du tube, lequel tient lieu de moule pendant cette opération, et une troisième étape pour la perforation de la surface latérale du tube.

Fig. 3

Fig. 1

Fig. 4

Fig. 2

Fig. 5

0 129 740